# EUROPEAN PATENT SPECIFICATION

(11) **EP 2 598 450 B1**
(45) Date of publication and mention of the grant of the patent: **22.05.2019**
(21) Application number: 11736396.0
(22) Date of filing: 29.07.2011
(51) Int. Cl.: C03C 1/00, C03C 13/00, C03C 13/06, C08K 7/14, C03C 1/02, C03B 1/02, C03B 5/12

(54) **COMPACTED BODY FOR USE AS MINERAL CHARGE IN THE PRODUCTION OF MINERAL WOOL**
PRESSKÖRPER ZUR VERWENDUNG ALS MINERALIENLADUNG BEI DER HERSTELLUNG VON MINERALWOLLE
CORPS COMPACTÉ POUR UNE UTILISATION EN TANT QUE CHARGE MINÉRALE DANS LA PRODUCTION DE LAINE MINÉRALE

(30) Priority: 07.09.2010 US 380564 P; 30.07.2010 EP 10171460
(43) Date of publication of application: 05.06.2013
(73) Proprietor: Rockwool International A/S, 2640 Hedehusene (DK)
(72) Inventor: CUYPERS, Jean, NL-6067 CX Linne (NL); LEISMANN, Andreas, 44795 Bochum (DE)
(74) Representative: Held, Stephan
(86) International application number: PCT/EP2011/063097
(87) International publication number: WO 2012/013780

(56) References cited:
- EP-A1- 0 155 439
- EP-A1- 1 382 642
- WO-A1-00/76929
- WO-A1-01/05725
- WO-A1-99/28250

## Description

### Field of the Invention

The present invention relates to a compacted body, in particular a briquette, suitable for use as a mineral charge in the production of man-made vitreous fibres (MMVF).

### Background of the Invention

Man-made vitreous fibres (MMVF) such as, e.g., glass fibres, ceramic fibres, basalt fibres, slag fibres and stone fibres (rock fibres), may be made by melting a mineral charge in a furnace and fiberising the melt, usually by a centrifugal fiberising process such as, for instance, by a spinning cup process or a cascade rotor process. The MMV fibres produced may form wool products such as glass wool or rock wool

In some of the furnaces used for MMVF production, there is a large pool of melt and the mineral charge is melted into this pool. Examples are tank and electric furnaces, which can be used for rock fibre production but mostly for glass fibre production.

Another type of furnace which is used for forming the melt for MMVF production, especially of fibres of the types that are referred to as rock, stone, slag and basalt fibres, is a shaft furnace or cupola furnace which contains a self-supporting column of solid coarse mineral and combustion material, and combustion gases permeate through this column so as to heat it and cause melting. The melt drains to the bottom of the column, where a pool of melt is usually formed, and the melt is removed from the base of the furnace. Since the column has to be both self-supporting and permeable it is necessary that the raw material should be relatively coarse and should have considerable strength, despite the high temperatures in the column which may exceed 1000°C.

The raw material can be formed of coarsely crushed, naturally occurring rock and slag or any other type of suitable coarse material, provided this will withstand the pressures and temperatures in the self-supporting column in the shaft furnace When applying more fine grained raw materials it is known to convert the finer particulate materials such as sands into bonded briquettes for addition to the furnace. These should have sufficient strength and temperature resistance to withstand the conditions in the self-supporting column in the shaft furnace in order that they melt prior to collapsing

It is necessary for the total charge in the furnace (i.e, lump mineral alone or lump mineral plus briquettes) to provide the composition which is desired for the MMV fibres which are to be made However, in shaft furnaces the residence time of material in the small melt pool at the base of the furnace is short, and the raw materials must be incorporated sufficiently rapidly in this pool of melt if a melt is to be obtained which is suitable for provision of final product having specified properties.

In the manufacture of mineral wool products, the fibres obtained in the spinning process are blown into a collection chamber and, while airborne and while still hot, are sprayed with a binder solution and randomly deposited as a mat or web onto a travelling conveyor.. The fibre web or mat is then transferred to a curing oven where heated air is blown through the mat to cure the binder. The cured mat or slab is trimmed at the sides and cut up into certain dimensions Both during spinning and during trimming, cutting up into final dimension and subsequent final inspection and check for defects, waste products are arising which are either dumped or, preferably, recycled to the MMVF production process.

To that end, the waste products are broken up into smaller, fine-grained pieces by milling in a rod mill or any appropriate device/equipment and/or unravelled and then compacted to form briquettes. Briquettes from MMVF waste are normally produced by moulding a mix of the MMVF waste, optionally together with other fine-grained components in finely divided form, and an appropriate binder into the desired briquette shape and curing the binder. Preferably, a cement binder is used to produce cement briquettes

The briquettes, possibly after interim storage, may be combined with virgin raw material and/or other lump raw material such as slag for MMVF production and returned via the melting furnace into the MMVF production process. Briquettes are particularly useful for forming part, often most of the charge in a shaft or cupola furnace. The amount of briquettes may be up to 100%, such as up to 80% or 50%, of the total charge. They may also be used as part of the charge in an electric furnace.

When using MMVF waste for briquette production, the waste products may contain cured and/or uncured mineral wool binder, depending on the point in the production line where the waste products are formed. The mineral wool binder resins may, for instance, be conventional phenol/formaldehyde resins, optionally extended with urea, or formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol/formaldehyde binders are the addition/elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249.

A further group of formaldehyde-free mineral wool binders are those which contain carbohydrates, for instance, starch or sugar, as additives, extenders or as reactive components of the binder system; see, e.g., WO 2007/014236.

In addition, WO 0076929 discloses the production and use of briquettes for mineral fibres production. The briquettes include vitreous fiber waste materials.

In EP 1 382 642, a formaldehyde-free aqueous binder composition for mineral fibers is disclosed, which contains a component (A) obtainable from the reaction between an alkanolamine and a carboxylic anhydride and a component (B) comprising a carbohydrate.

It has however been found that the presence of non-cured or partly cured sugar-containing mineral wool binder in the MMVF waste results in intolerable curing times of cement-containing briquettes, the reason being that sugar is a retarder for cement The term sugar, as used herein, refers to carbohydrates such as monosaccharides, disaccharides, polysaccharides and mixtures thereof.

### Summary of the Invention

An object of the present invention is therefore to provide cement-containing briquettes suitable for use as a mineral charge in the production of MMV fibres which, despite the presence of sugar-containing mineral wool binder in the MMVF waste show satisfactory strength development during briquette production

Surprisingly, it has been found that it is possible to avoid or alleviate the problem of inadequate cement curing and strength development of cement-containing MMVF waste briquettes if the sugar-containing MMVF binder additionally comprises a specific binder resin.

Accordingly, the present invention provides a compacted body, in particular a briquette, suitable for use as mineral charge in the production of man-made vitreous fibres (MMVF), said compacted body comprising:
(i) recycled waste mineral wool which comprises MMV fibres in contact with a non-cured MMVF binder comprising:
   (a) a sugar component and
   (b) a reaction product of a polycarboxylic acid component and an amine component and
(ii) a cured cement binder.

In a further aspect, the present invention relates to a method of producing a compacted body, in particular a briquette, suitable for use as mineral charge in the production of man-made vitreous fibres (MMVF), said method comprising the steps of:
mixing recycled waste mineral wool which comprises MMV fibres in contact with a non-cured MMVF binder comprising
   (a) a sugar component and
   (b) a reaction product of a polycarboxylic acid component and an amine component
   with a cement binder and
compacting / shaping and curing the mixture to form said compacted body.

In accordance with another aspect, the present invention relates to the use of a compacted body, in particular a cement briquette, as defined above as a component of the mineral charge in the production of MMV fibres or wool.

### Detailed Description and Preferred Embodiments

The present invention provides a compacted body, in particular a briquette, which is suitable for use as a component in the melting process in the production of mineral wool or glass wool. In the following, the terms "compacted body" and "briquette" are used interchangeably

The compacted body according to the present invention comprises:
(i) recycled waste mineral wool which comprises MMV fibres in contact with a non-cured MMVF binder comprising:
   (a) a sugar component and
   (b) a reaction product of a polycarboxylic acid component and an amine component and
(ii) a cured cement binder.

The reaction rate of cement-containing briquettes should neither be too fast nor too slow. Short hardening times of less than 30 minutes make it difficult to handle the briquette mixture comprising MMVF waste and cement binder. On the other hand, a period of more than 5 or 6 days for sufficient curing is not desirable in continuous MMVF production because the process should be as economically efficient as possible.

The present inventors have surprisingly found that adequate cement curing times are obtained, even in the presence of sugar components which act as a curing retarder, if a reaction product of a polycarboxylic acid component and an amine component is present during cement curing, preferably as part of the MMVF binder in the MMVF waste. This was all the more surprising as the reaction product of polycarboxylic acid and amine itself also exhibits a slight retarding effect on cement curing.

### MMVF waste

The recycled MMVF waste employed in accordance with the present invention may be any MMVF waste material obtained during MMVF production process, such as spinning waste and trimming waste and otherwise discarded MMVF material from the production of MMV fibres such as glass fibres, ceramic fibres, basalt fibres, slag fibres, rock fibres, stone fibres and others.

Depending on the site of origin in the MMVF production process, the recycled MMVF waste may comprise no binder, fully non-cured binder and/or fully cured binder. Preferably, the MMVF waste is a mixture of waste originating from different sites in the production line. For the purposes of the present invention, it is however required that the MMVF waste contains at least non-cured MMVF binder. The content of non-cured MMVF waste in the final MMVF waste mix may, for instance, vary between 10 to 90 percent by weight

The compacted body according to the present invention preferably comprises 10 to 80, more preferably 20 to 60, percent by weight of recycled MMVF waste, based on dry matter.

### Cement binder

The hydraulic briquette binder employed in accordance with the present invention comprises a cement, optionally together with conventional cement additives.

The cement generally is a hydraulic cement selected from Portland cement, Portland cement blends and non-Portland hydraulic cements. Suitable Portland cement blends are, for instance, blast furnace cement, flyash cement, pozzolan cement, silica fume cement and clinker cement. Suitable non-Portland hydraulic cements are, for instance, slag-lime cements, calcium aluminate cements and calcium sulfoaluminate cements.

Portland cement generally comprises clinker and gypsum as a steering material. However, in order to avoid undesirable sulfur emissions, it is also possible in the present invention to use a gypsum-free cement.

In accordance with the present invention, the compacted body generally comprises 1 to 30 percent by weight, preferably 3 to 25 percent by weight, and more preferably 5 to 15 percent by weight, of cement, based on the total weight (dry matter) of the compacted body

### Sugar component (a)

The sugar component (a) employed in accordance with the present invention is preferably selected from sucrose and reducing sugars or mixtures thereof.

A reducing sugar is any sugar that, in solution, has an aldehyde or a ketone group which allows the sugar to act as a reducing agent. In accordance with the present invention, reducing sugars may be used as such or as a carbohydrate compound that yields one or more reducing sugars in situ under thermal curing conditions. The sugar or carbohydrate compound may be a monosaccharide in its aldose or ketose form, a disaccharide, a triose, a tetrose, a pentose, a hexose, or a heptose; or a di-, oligo- or polysaccharide; or combinations thereof. Specific examples are glucose (= dextrose), starch hydrolysates such as corn syrup, arabinose, xylose, ribose, galactose, mannose, fructose, maltose, lactose and invert sugar. The sugar may also be a solubilised starch, hydrols from glucose refinement and molasses from sucrose refinement. Compounds such as sorbitol and mannitol, on the other hand, which do not contain or supply aldehyde or ketone groups, are less effective in the instant invention.

Crystalline dextrose is normally produced by subjecting an aqueous slurry of starch to hydrolysis by means of heat, acid or enzymes. Depending on the reaction conditions employed in the hydrolysis of starch, a variety of mixtures of glucose and intermediates is obtained which may be characterized by their DE number DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure glucose (= dextrose) and a DE of 0 to pure starch .

Only glucose syrup of high DE can crystallise easily and yield a product in powder or granular form. A most popular crystallised product is dextrose monohydrate with application in medicine and chewing tablets. Dextrose monohydrate is pure glucose (DE 100).

With lower DE numbers, the syrup gradually loses its tendency to crystallise. Below approx 45 DE, the syrup can be concentrated into a stable, non-crystallising liquid, for instance, Standard 42 DE syrup which finds wide spread use in canned fruit preserves, ice cream, bakery products, jam, candy, and all kinds of confectionery.

A preferred sugar component for use in the present invention is a reducing sugar having a dextrose equivalent DE of 40 to 100, preferably 50 to 100, and more preferably 85 to 100. Particularly preferred reducing sugar components are high DE glucose syrup, high-fructose syrup and mixtures thereof.

For commercial and practical reasons (availability), dextrose and sucrose are the most preferred sugar components in the present invention.

In accordance with the present invention, the MMVF binder generally comprises 10 to 90 percent by weight, preferably 20 to 85 percent by weight, and more preferably 35 to 75 percent by weight, of sugar component (a), based on the total weight (dry matter) of the MMVF binder components.

### Reaction product of polycarboxylic acid component and amine component

In accordance with the present invention, the MMVF binder comprises one or more water-soluble reaction products of a polycarboxylic acid component and an amine component which apparently neutralize or reduce the retarding effect of the sugar component on cement curing

### Polycarboxylic acid component

The polycarboxylic acid component is generally selected from dicarboxylic, tricarboxylic, tetracarboxcylic, pentacarboxylic, and like monomeric polycarboxylic acids, and anhydrides, salts and combinations thereof, as well as polymeric polycarboxylic acids, anhydrides, copolymers, salts and combinations thereof.

Specific examples of suitable polycarboxylic acid components are citric acid, aconitic acid, adipic acid, azelaic acid, butane tricarboxylic acid, butane tetracarboxylic acid, chlorendic acid, citraconic acid, dicyclopentadiene-maleic acid adducts, diethylenetriamine pentaacetic acid, adducts of dipentene and maleic acid, ethylenediamine tetraacetic acid (EDTA), fully maleated rosin, maleated tall-oil fatty acids, fumaric acid, glutaric acid, isophthalic acid, itaconic acid, maleated rosin oxidized to the carboxylic acid, maleic acid, malic acid, mesaconic acid, oxalic acid, phthalic acid, tetrahydrophthalic acid, hexahydrophthalic acid, terephthalic acid, sebacic acid, succinic acid, tartaric acid, aspartic acid, trimellitic acid, pyromellitic acid, trimesic acid, and anhydrides, salts and combinations thereof.

### Amine component

The term "amine component", as used herein, refers to ammonia and ammonia derivatives such as, for instance, ammonium salts, primary or secondary amines, alkanolamines and amino acids.

Specific examples of ammonium salts are ammonium chloride, ammonium sulphate, ammonium phosphate and the ammonium salts of the polycarboxylic acids

Specific examples of suitable primary and secondary amines are alkyl amines and dialkyl amines like methyl amine, dimethyl amine, propyl amine, butyl amine and polyamines like ethylene diamine

Specific examples of suitable alkanolamines are monoethanolamine, diethanolamine, triethanolamine, diisopropanolamine, triisopropanolamine, methyldiethanolamine, ethyldiethanol-amine, n-butyldiethanolamine, methyldiisopropanolamine, ethyl-isopropanolamine, ethyldiisopropanolamine, 3-amino-1,2-propanediol, 2-amino-1,3-propanediol, aminoethylethanolamine and tris(hydroxymethyl)aminomethane.

Specific examples of amino acids are glycine, alanine, valine, leucine, serine, lycine and arginine.

Urea and urea compounds such as cyclic ureas may also be used as a source for the amine component

The reaction between the polycarboxylic acid component and the amine component may result in different reaction products, depending on the nature of the starting compounds and the type of reaction between their functional groups. For instance, addition-elimination reactions may result in formation of amides and imides, neutralisation may lead to salts such as triammoniumcitrate. If the starting materials have additional functional groups such as hydroxy groups, ester formation is likely to occur

A particularly preferred MMVF binder comprises the water-soluble reaction product of at least one carboxylic anhydride and at least one alkanolamine

Preferred alkanolamines for use in the preparation of this specific MMVF binder are alkanolamines having at least two hydroxy groups such as, for instance, alkanolamines represented by the formula 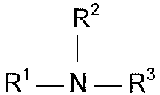 wherein R¹ is hydrogen, a C₁₋₁₀ alkyl group or a C₁₋₁₀ hydroxyalkyl group; and R² and R³ are C₁₋₁₀ hydroxyalkyl groups Preferably, R² and R³, independently are C₂₋₅ hydroxyalkyl groups, and R¹ is hydrogen, a C₁₋₅ alkyl group or a C₂₋₅ hydroxyalkyl group Particularly preferred hydroxyalkyl groups are β-hydroxyalkyl groups.

Specific examples of suitable alkanolamines are monoethanolamine, diethanolamine, triethanolamine, diisopropanolamine, triisopropanolamine, methyldiethanolamine, ethyldiethanolamine, n-butyldiethanolamine, methyldiisopropanolamine, ethyl-isopropanolamine, 3-amino-1,2-propanediol, 2-amino-1,3-propanediol, aminoethylethanolamine and tris(hydroxymethyl)aminomethane. Diethanolamine is the currently preferred alkanolamine

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred In a particularly preferred embodiment of the invention, two different anhydrides selected from cycloaliphatic and/or aromatic anhydrides are employed. These different anhydrides are preferably reacted in sequence

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3.

In the preparation of the binder resin, the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less In general, the final binder composition has an equivalent ratio of (NH+OH) / (COOH) within the range of from 1.25 to 1 55

The reaction between the alkanolamine and carboxylic anhydride reactants is carried out in the usual manner, for instance, as described in WO 99/36368, WO 01/05725, WO 02/06178, WO 2004/007615 and WO 2006/061249, the entire contents of which is incorporated herein by reference.

If appropriate, an additional polycarboxylic acid may be employed in the reaction and is preferably added to the reaction mixture before addition of the carboxylic anhydride reactant Specific examples of such additional polycarboxylic acids are adipic acid, aspartic acid, azelaic acid, butane tricarboxylic acid, butan tetracarboxylic acid, citraconic acid, citric acid, fumaric acid, glutaric acid, itaconic acid, maleic acid, malic acid, mesaconic acid, oxalic acid, sebacic acid, succinic acid, tartaric acid and trimesic acid.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted Increasing the reaction temperature from 70-95°C to 100-200°C allows a higher conversion of monomers to oligomers In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA) and triethanolamine (TEA). The base is preferably added to the reaction mixture after the reaction between the alkanol amine and the carboxylic anhydride has been actively stopped by adding water.

### Other Components of the MMVF binder

In addition to the sugar component and the reaction product of a polycarboxylic acid component and an amine component, the MMVF binder according to the present invention may comprise conventional binder additives, for instance, curing accelerators such as hypophosphorous acid and phosphonic acid, silane coupling agents such as γ-aminopropyltriethoxysilane; thermal stabilizers; UV stabilizers; emulsifiers; surface active agents and/or conventional used wetting agents; plasticizers; fillers and extenders; pigments; hydrophobizing agents; flame retardants; corrosion inhibitors; anti-oxidants; and others. These optional binder additives and adjuvants are used in amounts generally not exceeding 20 wt % of the binder solids.

### Briquette production

In the present invention, the briquettes may be produced by any suitable method known in the art. Generally, the production process comprises the steps of:
mixing recycled waste mineral wool which comprises MMV fibres in contact with a non-cured MMVF binder comprising
   (a) a sugar component and
   (b) a reaction product of a polycarboxylic acid component and an amine component
   with a cement binder and
compacting / shaping and curing the mixture to form a compacted body/briquette.

In addition to the MMVF waste and the cement binder, the briquettes may include other suitable virgin or waste mineral charge materials, for instance, raw materials such as soda; iron ore; boron-containing materials; phosphorus-containing materials such as apatite; dolomite, quartz sand; olivine sand; limestone; rutile; magnesite; magnetite; brucite, bauxite, kaolin, ilmenite, alumina-containing material such as bauxite and filter dusts from the calcination of bauxite and other processes involving heating and/or calcination of high alumina materials; slag from the metallurgical industry, especially steelmaking slag such as converter slag or electric arc furnace slag, and slag from the ferro-alloy industry such as ferro-chromium, ferro-manganese or ferro-silica slag; slag and residues from the primary production of aluminium such as spent aluminium pot lining or red mud; dried or wet sludge from the paper industry; sewage sludge; bleaching clay; residues from the incineration of household and industrial wastes, especially slag or filter ashes from the incineration of municipal solid wastes; glass waste, for instance, from the vitrification of other waste products; glass cullet; waste products from the mining industry, especially minestone from the excavation of coal; residues from the incineration of fossil fuel, especially from the combustion of coal at power plants; spent abrasive sand; spent moulding sand from iron and steel casing; waste sieving sand; glass-fibre reinforced plastic; and fines and breakage waste from the ceramic and brick industry.

In a currently preferred method, the production of briquettes involves the following steps:

### Collecting of MMVF waste with non-cured binder

Spinning waste with varying contents of non-cured binder is collected and milled separately or in combination with cured wool waste or in combination with cured wool waste and fines from rocks and briquettes and wool waste coming back from the market. Milling is performed in rod mills or hammer mills or another appropriate device which are run with or without additional water. Milling is preferably carried out to a degree such that the milled mixture has a density of e.g. 900 to 1500 kg/m³

### Mixing with cement / water

In accordance with the briquette recipe, different coarse raw materials, including the MMVF waste, are added into a mixer. Then, other materials, for instance, 3-15 wt.% of cement, 1-5 wt.% of fly ash, 3-20 wt.% of other materials such as clinker dust, lime, alumina-containing material etc., The water content of the mixture is approx. 8-18 wt.%.

In order to achieve adequate cement curing times despite the presence of sugar which acts as a curing retarder, it is important to properly adjust the weight ratio of sugar component and cement. Preferably, the weight ratio of sugar component to cement is within the range of 0.1 to 5.0 parts by weight, more preferably 0.3 to 3.0 parts by weight, of sugar component per 100 parts by weight of cement

### Compacting/shaping of the briquette mixture

The mixture is poured into moulds and pressed discontinuously under a pressure of, for instance, 25 to 60 kPa The shape is not limited but a compact shape is preferred to avoid misalignment in the shaft oven. Currently preferred is the production of hexagon-shaped briquettes having a diameter of about 5 to 15 cm and a height of about 5 to 13 cm.

### Curing

Curing of the briquettes is preferably effected at a curing temperature of from 15 to 65°C, more preferably 25 to 40°C, and at a relative humidity of > 70%, more preferably > 90%. Curing times generally range from 6h to 120 h

The briquettes obtained in accordance with the present invention generally have a compression strength sufficient to enable the briquettes to be transported and to carry the raw material column in the shaft oven or cupola. A compression strength of, for instance, 3.5 to 5.5 MPa is preferred

The fresh briquettes have a density of at least 70%, preferably 80 to 90% of the theoretical density which could vary between 2200 and 5000 kg/m³, depending on the choice of raw materials. The density of the briquettes preferably is within the range of 1700 to 2200 kg/m³.

The briquette weight depends on size and density and, for instance, varies between 0,4 to 3 kg, preferably 1,5 to 2,2 kg

### Use of the briquettes as mineral charge in the production of MMV fibres

The briquettes produced in accordance with the invention are useful as mineral charge in any type of furnace which can be used to melt raw materials for making MMV fibres. The invention is particularly useful in shaft furnaces, especially in cupola furnaces.

The invention is especially beneficial in processes where a significant part (e.g. > 10%) of the charge is in the form of briquettes. Generally at least 20 to 25%, preferably at least 30% of the charge (by weight) is provided by briquettes. In some processes higher amounts, e.g 45 to 55%, are preferred and amounts above 75% or even above 80% up to 100% are sometimes preferred. The remaining charge may be any suitable virgin or waste material

The MMV fibres may be made from the fibre-forming mineral melt in conventional manner. Generally, they are made by a centrifugal fibre-forming process. For instance, the fibres may be formed by a spinning cup process in which they are thrown outwardly through perforations in a spinning cup, or melt may be thrown off a rotating disc and fibre formation may be promoted by blasting jets of gas through the melt. Preferably a cascade spinner is used and fibre formation is conducted by pouring the melt onto the first rotor in a cascade spinner. Preferably the melt is poured onto the first of a set of two, three or four rotors, each of which rotates about a substantially horizontal axis, whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMV fibres may be used for any of the purposes for which MMVF products are known. These include fire insulation and protection, thermal insulation, noise reduction and regulation, construction, horticultural media, and reinforcement of other products such as plastics and as a filler. The materials may be in the form of bonded batts or the materials may be comminuted into a granulate. Bonded batts include materials such as slabs and pipe sections

The following examples are intended to further illustrate the invention without limiting its scope..

### Preparation of MMVF binder B1

158 g of diethanolamine (DEA) are placed in a 1-litre glass reactor provided with a stirrer and a heating/cooling jacket. The temperature of the diethanolamine is raised to 60°C whereafter 91 g of tetrahydrophthalic anhydride (THPA) are added After raising the temperature and keeping it at 130°C, a second portion of 46 g of tetrahydrophthalic anhydride is added followed by 86 g of trimellitic anhydride (TMA). After reacting at 130°C for 1 hour, the mixture is cooled to 95°C and 210 g of water added and the mixture stirred for 1 hour. After cooling to ambient temperature, the obtained resin is ready for use. The solids content of the binder was 58 %.

The binder was mixed with a standard silane (gamma-aminopropyltriethoxysilane) in an amount of 1.4% of the total solids Hypophosphorous acid was also added in an amount of 2% of the binder resin. Finally, the binder was diluted with water to 15% to 20% solids and further diluted before use to obtain a MMVF binder designated B1.

### Briquette production

Following the general briquette production process described herein-above, hexagon-shaped briquettes were produced from MMVF waste and Portland cement. The MMVF waste contained different types of non-cured MMVF binder: (1) binder B1; (2) binder B1 + dextrose; (3) dextrose only

The following tables show the compression strength development of the cement briquettes for the different types of non-cured MMVF binder in the MMVF waste. It can be seen that pure dextrose has the most pronounced retarding effect on cement curing whereas binder B1 has only a slight retarding effect. Surprisingly, the binder B1/dextrose mixture is much less retardant than pure dextrose, apparently due to a neutralising effect of binder B1 on the retarding by dextrose.

**Table 1**

| Impact Binder B1 on compression strength development | | | | | Impact Binder B1/Dextrose on compression strength development | | | | |
|---|---|---|---|---|---|---|---|---|---|
| Ratio B1-C (%) | Strength (MPa) | | | | Ratio Dex-C (%) | Strength (MPa) | | | |
| | 1 Day | 2 Days | 3 Days | 7 Days | | 1 Day | 2 Days | 3 Days | 7 Days |
| 0,38 | 32,4 | 34,8 | 32,4 | 39,1 | 0,29 | 33,40 | 33,25 | 38,95 | 43,85 |
| 0,50 | 27,7 | 32,3 | 34,5 | 39,1 | 0,39 | 33,40 | 32,30 | 35,60 | 46,40 |
| 0,63 | 30,0 | 32,3 | 37,0 | 38,8 | 0,48 | 33,10 | 33,15 | 34,40 | 41,40 |
| 0,75 | 28,7 | 33,7 | 33,8 | 40,8 | 0,58 | 33,90 | 35,00 | 38,00 | 47,85 |
| 0,88 | 31,5 | 33,8 | 35,5 | 39,3 | 0,68 | 34,10 | 35,40 | 36,80 | 44,65 |
| 1,0 | 27,9 | 33,3 | 34,3 | 42,0 | 0,77 | 32,85 | 34,90 | 37,50 | 43,75 |
| 1,5 | 27,5 | 30,2 | 34,7 | 36,5 | 1,16 | 24,65 | 34,10 | 30,50 | 39,60 |
| 2,0 | 26,2 | 32,5 | 33,9 | 35,2 | 1,55 | 3,75 | 22,00 | 26,20 | 33,40 |
| 4,0 | 26,6 | 31,4 | 27,0 | 33,7 | 3,09 | 2,50 | 22,20 | 25,60 | 30,30 |
| 6,0 | 21,8 | 27,9 | 31,4 | 31,5 | 4,64 | 3,85 | 20,35 | 23,60 | 28,30 |

**Table 2**

| Impact Dextrose on compression strength development | | | | |
|---|---|---|---|---|
| Ratio Dex-C (%) | Strength (MPa) | | | |
| | 1 Day | 2 Days | 3 Days | 7 Days |
| 0 | 34,15 | 39,9 | 35,8 | 41 |
| 0,53 | 29,3 | 33 | 35,5 | 39,05 |
| 1,06 | 1,6 | 1,45 | 7,85 | 26,2 |
| 2,12 | 2,1 | 2,45 | 2,95 | 31,05 |
| 3,18 | 0,75 | 2,25 | 2,35 | 23,15 |
| 4,24 | 0,55 | 2,15 | 2,55 | 3,35 |

| | | | | |
|---|---|---|---|---|
| Ratio Dex-C = weight ratio of dextrose to cement Ratio B1-C = weight ratio of binder B1 to cement | | | | |

## Claims

1. A compacted body, in particular a briquette, suitable for use as mineral charge in the production of man-made vitreous fibres (MMVF), said compacted body comprising:
(i) recycled waste mineral wool which comprises MMV fibres in contact with a non-cured MMVF binder comprising:
(a) a sugar component and
(b) a reaction product of a polycarboxylic acid component and an amine component
and
(ii) a cement binder

2. The compacted body of claim 1, wherein the MMV fibres are selected from stone wool and glass wool.

3. The compacted body of claim 1 or 2, wherein the cement is a Portland cement.

4. The compacted body of any one of the preceding claims, wherein the sugar component is selected from sucrose and reducing sugars such as hexoses and pentoses, and mixtures thereof,

5. The compacted body of claim 4, wherein the sugar component is a reducing sugar having a dextrose equivalent (DE) of 40 to 100, preferably 50 to 100, and more preferably 85 to 100.

6. The compacted body of claim 4 or 5, wherein the sugar component is a reducing sugar selected from high DE glucose syrup and high-fructose syrup and mixtures thereof

7. The compacted body of any one of the preceding claims, wherein the polycarboxylic acid component is selected from dicarboxylic, tricarboxylic, tetracarboxylic, pentacarboxylic, and like monomeric polycarboxylic acids, and anhydrides, salts and combinations thereof, as well as polymeric polycarboxylic acids, anhydrides, copolymers, salts and combinations thereof

8. The compacted body of claim 7, wherein the polycarboxylic acid component is selected from citric acid, aconitic acid, adipic acid, azelaic acid, butane tricarboxylic acid, butane tetracarboxylic acid, chlorendic acid, citraconic acid, dicyclopentadiene-maleic acid adducts, fully maleated rosin, maleated tall-oil fatty acids, fumaric acid, glutaric acid, isophthalic acid, itaconic acid, maleated rosin oxidized to the carboxylic acid, maleic acid, malic acid, mesaconic acid, oxalic acid, phthalic acid, tetrahydrophthalic acid, hexahydrophthalic acid, terephthalic acid, sebacic acid, succinic acid, tartaric acid, aspartic acid, trimellitic acid, pyromellitic acid, trimesic acid, and anhydrides, salts and combinations thereof

9. The compacted body of any one of the preceding claims, wherein the amine component is selected from ammonia, primary or secondary amines, alkanolamines, amino acids or urea

10. The compacted body of any one of the preceding claims, wherein the MMVF binder comprises
(a) a sugar component and
(b) a reaction product of a carboxylic anhydride and an alkanolamine

11. The compacted body of any one of the preceding claims, which comprises 1 to 30 percent by weight, preferably 5 to 15 percent by weight, of cement, based on the total weight (dry matter) of the compacted body

12. The compacted body of any one of the preceding claims, wherein the weight ratio of sugar component to cement is within the range of 01 to 5.0 parts by weight, preferably 0.3 to 3.0 parts by weight, of sugar component per 100 parts by weight of cement.

13. The compacted body of any one of the preceding claims, which comprises 10 to 80, preferably 20 to 60, percent by weight of recycled waste mineral wool, based on dry matter.

14. The compacted body of any one of the preceding claims, which has a density within the range of from 1700 to 2200 kg/m³

15. A method of producing a compacted body, in particular a briquette, suitable for use as mineral charge in the production of man-made vitreous fibres (MMVF), said method comprising the steps of:
mixing recycled waste mineral wool which comprises MMV fibres in contact with a non-cured MMVF binder comprising
(a) a sugar component and
(b) a reaction product of a polycarboxylic acid component and an amine component
with a cement binder and
compacting/shaping and curing the mixture to form said compacted body.

16. The method of claim 15, wherein the MMVF binder comprises
(a) a sugar component,
(b) a reaction product of a carboxylic anhydride and an alkanolamine

17. The method of claim 15 or 16, wherein curing of the mixture is effected at a curing temperature of from 15 to 65°C, preferably 30 to 40°C, and at a relative humidity of > 70%, preferably > 90%

18. The use of a compacted body according to any one of claims 1 to 14 as a mineral charge in the production of MMV fibres or wool.

## Patentansprüche

1. Kompaktierter Körper, insbesondere ein Brikett, geeignet zur Verwendung als Mineralcharge bei der Herstellung von künstlichen glasartigen Fasern (MMVF), wobei der kompaktierte Körper:
(i) recycelten Mineralwolle-Abfall, der MMV-Fasern in Kontakt mit einem nicht gehärteten MMVF-Bindemittel, umfassend:
(a) eine Zuckerkomponente und
(b) ein Reaktionsprodukt von einer Polycarbonsäurekomponente und einer Aminkomponente, und
(ii) ein Zementbindemittel
umfasst.

2. Kompaktierter Körper nach Anspruch 1, wobei die MMV-Fasern aus Steinwolle und Glaswolle ausgewählt sind.

3. Kompaktierter Körper nach Anspruch 1 oder 2, wobei der Zement ein Portlandzement ist.

4. Kompaktierter Körper nach irgendeinem der vorhergehenden Ansprüche, wobei die Zuckerkomponente ausgewählt ist aus Saccharose und reduzierenden Zuckern, wie Hexosen und Pentosen, und Mischungen davon.

5. Kompaktierter Körper nach Anspruch 4, wobei die Zuckerkomponente ein reduzierender Zucker mit einem Dextroseäquivalent (DE) von 40 bis 100, bevorzugt 50 bis 100 und bevorzugter 85 bis 100 ist.

6. Kompaktierter Körper nach Anspruch 4 oder 5, wobei die Zuckerkomponente ein reduzierender Zucker ist, der aus Glucosesirup mit hohem DE und Sirup mit hohem Fructosegehalt und Mischungen davon ausgewählt ist.

7. Kompaktierter Körper nach irgendeinem der vorhergehenden Ansprüche, wobei die Polycarbonsäurekomponente ausgewählt ist aus Dicarbon-, Tricarbon-, Tetracarbon-, Pentacarbon- und ähnlichen monomeren Polycarbonsäuren und Anhydriden, Salzen und Kombinationen davon sowie polymeren Polycarbonsäuren, Anhydriden, Copolymeren, Salzen und Kombinationen davon.

8. Kompaktierter Körper nach Anspruch 7, wobei die Polycarbonsäurekomponente ausgewählt ist aus Citronensäure, Aconitsäure, Adipinsäure, Azelainsäure, Butantricarbonsäure, Butantetracarbonsäure, Chlorendinsäure, Citraconsäure, Dicyclopentadien-Maleinsäure-Addukten, vollständig maleiertem Colophonium, maleierten Tallölfettsäuren, Fumarsäure, Glutarsäure, Isophthalsäure, Itaconsäure, maleiertem Colophonium, oxidiert zur Carbonsäure, Maleinsäure, Äpfelsäure, Mesaconsäure, Oxalsäure, Phthalsäure, Tetrahydrophthalsäure, Hexahydrophthalsäure, Terephthalsäure, Sebacinsäure, Bernsteinsäure, Weinsäure, Asparaginsäure, Trimellitsäure, Pyromellitsäure, Trimesinsäure und Anhydriden, Salzen und Kombinationen davon.

9. Kompaktierter Körper nach irgendeinem der vorhergehenden Ansprüche, wobei die Aminkomponente ausgewählt ist aus Ammoniak, primären oder sekundären Aminen, Alkanolaminen, Aminosäuren oder Harnstoff.

10. Kompaktierter Körper nach irgendeinem der vorhergehenden Ansprüche, wobei das MMVF-Bindemittel
(a) eine Zuckerkomponente und
(b) ein Reaktionsprodukt von einem Carbonsäureanhydrid und einem Alkanolamin
umfasst.

11. Kompaktierter Körper nach irgendeinem der vorhergehenden Ansprüche, der 1 bis 30 Gewichtsprozent, bevorzugt 5 bis 15 Gewichtsprozent, Zement, bezogen auf das Gesamtgewicht (Trockensubstanz) des kompaktierten Körpers, umfasst.

12. Kompaktierter Körper nach irgendeinem der vorhergehenden Ansprüche, wobei das Gewichtsverhältnis von Zuckerkomponente zu Zement im Bereich von 0,1 bis 5,0 Gewichtsteilen, bevorzugt 0,3 bis 3,0 Gewichtsteilen, Zuckerkomponente pro 100 Gewichtsteilen Zement liegt.

13. Kompaktierter Körper nach irgendeinem der vorhergehenden Ansprüche, der 10 bis 80, vorzugsweise 20 bis 60, Gewichtsprozent an recyceltem Mineralwolle-Abfall, bezogen auf die Trockensubstanz, enthält.

14. Kompaktierter Körper nach irgendeinem der vorhergehenden Ansprüche, der eine Dichte im Bereich von 1700 bis 2200 kg/m³ aufweist.

15. Verfahren zur Herstellung eines kompaktierten Körpers, insbesondere eines Briketts, der zur Verwendung als Mineralcharge bei der Herstellung von künstlichen glasartigen Fasern (MMVF) geeignet ist, wobei das Verfahren die folgenden Schritte umfasst:
Mischen von recyceltem Mineralwolle-Abfall, der MMV-Fasern in Kontakt mit einem nicht gehärteten MMVF-Bindemittel, umfassend
(a) eine Zuckerkomponente und
(b) ein Reaktionsprodukt von einer Polycarbonsäurekomponente und einer Aminkomponente
mit einem Zementbindemittel und
Kompaktieren/Formen und Härten der Mischung, um den kompaktierten Körper zu bilden.

16. Verfahren nach Anspruch 15, wobei das MMVF-Bindemittel
(a) eine Zuckerkomponente,
(b) ein Reaktionsprodukt von einem Carbonsäureanhydrid und einem Alkanolamin
umfasst.

17. Verfahren nach Anspruch 15 oder 16, wobei das Härten der Mischung bei einer Härtungstemperatur von 15 bis 65 °C, bevorzugt 30 bis 40 °C, und bei einer relativen Feuchtigkeit von > 70%, bevorzugt > 90%, ausgeführt wird.

18. Verwendung eines kompaktierten Körpers nach irgendeinem der Ansprüche 1 bis 14 als eine Mineralcharge bei der Herstellung von MMV-Fasern oder -Wolle.

## Revendications

1. Corps compacté, en particulier briquette, utilisable en tant que charge minérale dans la production de fibres vitreuses synthétiques (MMVF), ledit corps compacté comprenant :
(i) une laine minérale de rebut recyclée qui comprend des fibres MMV en contact avec un liant pour MMVF non durci comprenant :
(a) un composant sucre et
(b) un produit de réaction d'un composant acide polycarboxylique et d'un composant amine, et
(ii) un ciment liant.

2. Corps compacté selon la revendication 1, dans lequel les fibres MMV sont choisies parmi la laine de roche et la laine de verre.

3. Corps compacté selon la revendication 1 ou 2, dans lequel le ciment est un ciment Portland.

4. Corps compacté selon l'une quelconque des revendications précédentes, dans lequel le composant sucre est choisi parmi le saccharose et les sucres réducteurs tels que les hexoses et les pentoses, et leurs mélanges.

5. Corps compacté selon la revendication 4, dans lequel le composant sucre est un sucre réducteur ayant un équivalent dextrose (DE) de 40 à 100, de préférence de 50 à 100, et mieux encore de 85 à 100.

6. Corps compacté selon la revendication 4 ou 5, dans lequel le composant sucre est un sucre réducteur choisi parmi le sirop de glucose à DE élevé et le sirop à forte teneur en fructose et leurs mélanges.

7. Corps compacté selon l'une quelconque des revendications précédentes, dans lequel le composant acide polycarboxylique est choisi parmi les acides dicarboxyliques, tricarboxyliques, tétracarboxyliques, pentacarboxyliques, et polycarboxyliques monomères analogues, et leurs anhydrides, sels et combinaisons, ainsi que les acides polycarboxyliques polymères, leurs anhydrides, copolymères, sels et combinaisons.

8. Corps compacté selon la revendication 7, dans lequel le composant acide polycarboxylique est choisi parmi l'acide citrique, l'acide aconitique, l'acide adipique, l'acide azélaïque, l'acide butanetricarboxylique, l'acide butanetétracarboxylique, l'acide chlorendique, l'acide citraconique, les adduits de dicyclopentadiène-acide maléique, la colophane entièrement maléatée, les acides gras de tallol maléatés, l'acide fumarique, l'acide glutarique, l'acide isophtalique, l'acide itaconique, la colophane maléatée oxydée en l'acide carboxylique, l'acide maléique, l'acide malique, l'acide mésaconique, l'acide oxalique, l'acide phtalique, l'acide tétrahydrophtalique, l'acide hexahydrophtalique, l'acide téréphtalique, l'acide sébacique, l'acide succinique, l'acide tartrique, l'acide aspartique, l'acide trimellitique, l'acide pyromellitique, l'acide trimésique, et leurs anhydrides, sels et combinaisons.

9. Corps compacté selon l'une quelconque des revendications précédentes, dans lequel le composant amine est choisi parmi l'ammoniac, les amines primaires ou secondaires, les alcanolamines, les acides aminés et l'urée.

10. Corps compacté selon l'une quelconque des revendications précédentes, dans lequel le liant pour MMVF comprend
(a) un composant sucre et
(b) un produit de réaction d'un anhydride carboxylique et d'une alcanolamine.

11. Corps compacté selon l'une quelconque des revendications précédentes, qui comprend 1 à 30 % en poids, de préférence 5 à 15 % en poids, de ciment, par rapport au poids total (matière sèche) du corps compacté.

12. Corps compacté selon l'une quelconque des revendications précédentes, dans lequel le rapport en poids du composant sucre au ciment est situé dans la plage allant de 0,1 à 5,0 parties en poids, de préférence de 0,3 à 3,0 parties en poids, de composant sucre pour 100 parties en poids de ciment.

13. Corps compacté selon l'une quelconque des revendications précédentes, qui comprend 10 à 80, de préférence 20 à 60, % en poids de laine minérale de rebut recyclée, par rapport à la matière sèche.

14. Corps compacté selon l'une quelconque des revendications précédentes, qui a une masse volumique située dans la plage allant de 1700 à 2200 kg/cm³.

15. Procédé de production d'un corps compacté, en particulier d'une briquette, convenant pour une utilisation en tant que charge minérale dans la production de fibres vitreuses synthétiques (MMVF), ledit procédé comprenant les étapes suivantes :
mélange de laine minérale de rebut recyclée qui comprend des fibres MMV en contact avec un liant pour MMVF non durci comprenant :
(a) un composant sucre et
(b) un produit de réaction d'un composant acide polycarboxylique et d'un composant amine,
avec un ciment liant et
compactage/façonnage et durcissement du mélange pour former ledit corps compacté.

16. Procédé selon la revendication 15, dans lequel le liant pour MMVF comprend
(a) un composant sucre,
(b) un produit de réaction d'un composant anhydride carboxylique et d'une alcanolamine.

17. Procédé selon la revendication 15 ou 16, dans lequel le durcissement du mélange est effectué à une température de durcissement de 15 à 65°C, de préférence de 30 à 40°C, et sous une humidité relative > 70 %, de préférence > 90 %.

18. Utilisation d'un corps compacté selon l'une quelconque des revendications 1 à 14 en tant que charge minérale dans la production de fibres MMV ou de laine.
